(19) Europäisches Patentamt
European Patent Office
Office européen des brevets

(11) **EP 3 092 848 B1**

(12) **EUROPEAN PATENT SPECIFICATION**

(45) Date of publication and mention
of the grant of the patent:
**19.08.2020 Bulletin 2020/34**

(51) Int Cl.:
*H04W 8/00* (2009.01)    *H04W 84/12* (2009.01)
*H04W 88/06* (2009.01)   *H04W 52/00* (2009.01)
*H04W 4/00* (2018.01)

(21) Application number: **15733237.0**

(22) Date of filing: **06.01.2015**

(86) International application number:
**PCT/US2015/010370**

(87) International publication number:
**WO 2015/103632 (09.07.2015 Gazette 2015/27)**

(54) **SYSTEMS, METHODS AND DEVICES FOR MULTIPLE SIGNAL CO-EXISTENCE IN MULTIPLE-USE FREQUENCY SPECTRUM**

SYSTEME, VERFAHREN UND VORRICHTUNGEN ZUR KOEXISTENZ MEHRERER SIGNALE IN EINEM MEHRFACH VERWENDBAREN FREQUENZSPEKTRUM

SYSTÈMES, PROCÉDÉS ET DISPOSITIFS POUR LA COEXISTENCE DE PLUSIEURS SIGNAUX DANS UN SPECTRE DE FRÉQUENCES À UTILISATIONS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2014 US 201461924194 P**
**25.09.2014 US 201414496694**

(43) Date of publication of application:
**16.11.2016 Bulletin 2016/46**

(73) Proprietor: **Intel IP Corporation**
**Santa Clara, CA 95054 (US)**

(72) Inventors:
• **BASHAR, Shafi**
  **San Francisco, California 94123-2141 (US)**
• **FWU, Jong-Kae**
  **Sunnyvale, California 94087 (US)**
• **PAPATHANASSIOU, Apostolos**
  **San Jose, California 95136 (US)**
• **AZIZI, Shahrnaz**
  **Cupertino, California 95014 (US)**

(74) Representative: **Rooney, John-Paul**
**Withers & Rogers LLP**
**4 More London Riverside**
**London SE1 2AU (GB)**

(56) References cited:
**WO-A1-2013/179095   US-A1- 2013 083 783**

• **TIMO NIHTILA ET AL: "System performance of LTE and IEEE 802.11 coexisting on a shared frequency band", 2013 IEEE WIRELESS COMMUNICATIONS AND NETWORKING CONFERENCE (WCNC), 1 April 2013 (2013-04-01), pages 1038-1043, XP055356721, DOI: 10.1109/WCNC.2013.6554707 ISBN: 978-1-4673-5937-5**
• **MIHAELA BELURI ET AL: "Mechanisms for LTE coexistence in TV white space", DYNAMIC SPECTRUM ACCESS NETWORKS (DYSPAN), 2012 IEEE INTERNATIONAL SYMPOSIUM ON, IEEE, 16 October 2012 (2012-10-16), pages 317-326, XP032342357, DOI: 10.1109/DYSPAN.2012.6478155 ISBN: 978-1-4673-4447-0**
• **TIMO NIHTILA ET AL.: 'System performance of LTE and IEEE 802.11 coexisting on a shared frequency band' WIRELESS COMMUNICATIONS AND NETWORKING CONFERENCE (WCNC 07 April 2013, XP055356721 Retrieved from the Internet: <URL:http://ieeexplore.ieee.org/stamp/stamp .jsp?arnumber=6554707>**
• **ANDRE M. CAVALCANTE ET AL.: 'Performance Evaluation of LTE and Wi-Fi Coexistence in Unlicensed Bands' VEHICULAR TECHNOLOGY CONFERENCE (VTC SPRING 02 June 2013, XP032547839 Retrieved from the Internet: <URL:http://ieeexplore.ieee.org/xpl/article Details.jsp?arnumber=6692702>**

- **MIHAELA BELURI ET AL.: 'Mechanisms for LTE Coexistence in TV White Space' DYNAMIC SPECTRUM ACCESS NETWORKS (DYSPAN 16 October 2012, XP032342357 Retrieved from the Internet: <URL:http://ieeexplore.ieee.org/xpl/article Details.jsp?tp=&arnumber=6478155>**
- **INTEL CORPORATION (UK) LTD: "TDM Solutions for In-Device Coexistence", 3GPP DRAFT; R2-105666, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 5 October 2010 (2010-10-05), XP050452677, [retrieved on 2010-10-05]**

## Description

<u>Technical Field</u>

The present disclosure relates to wireless signal transmissions and more specifically co-existence of multiple systems having transmissions that overlap in the frequency band.

The article by Timo Nihtila et al, entitled "System performance of LTE and IEEE 802.11 coexisting on a shared frequency band", from the WCNC, 1 April 2013 (XPO55356721), discloses systems with 3GPP Long-Term Evolution (LTE) and IEEE 802.11 Wireless Local Area Networks (WLAN) in a situation where LTE downlink (DL) has been expanded over to unlicensed frequency band usually used by WLAN. A simple fractional bandwidth sharing mechanism is used to allow both technologies to transmit.

The article by Michaela Beluri et al., entitled "Mechanisms for LTE coexistence in TV white space", from the IEEE Symposium on Dynamic Spectrum Access Networks, 16 October 2012 (XPO32342357), presents a high-level description of an LTE system operating in license exempt bands. Since wireless networks potentially using different air interfaces may operate in these bands, coexistence is a challenge that needs to be addressed. This paper focuses on non-coordinated mechanisms for secondary users' coexistence, and introduces a coexistence-gap-based method for LTE to dynamically share the spectrum with other secondary users.

The Document XP050452677 "TDM solutions for In-Device Coexistence " discusses coexistence interference scenarios, usage scenarios, coordination modes and potential solutions. The focus is on TDM solutions which handle the coexistence between LTE and ISM radio (Wi-Fi and Bluetooth).

<u>Brief Description of the Drawings</u>

Figure 1 is a schematic diagram illustrating a wireless system consistent with embodiments disclosed herein.

Figure 2 is a schematic diagram illustrating a long term evolution (LTE) communication frame consistent with embodiments disclosed herein.

Figure 3 A is a diagram of a subframe muting gap consistent with embodiments disclosed herein.

Figure 3B is a diagram of a frame muting gap consistent with embodiments disclosed herein.

Figure 3C is a diagram of a symbol muting gap consistent with embodiments disclosed herein.

Figure 4 is a map of symbol muting gaps with user equipment (UE) reference signals consistent with embodiments disclosed herein.

Figure 5 is a graph of intra-beacon muting gaps consistent with embodiments disclosed herein.

Figure 6 A is a diagram of an information element consistent with embodiments disclosed herein.

Figure 6B is a diagram of an information element within a beacon signal consistent with embodiments disclosed herein.

Figure 7A is a diagram of an information element describing a muting gap pattern consistent with embodiments disclosed herein.

Figure 7B is a diagram of an information element describing a muting gap sequence consistent with embodiments disclosed herein.

Figure 8A is a diagram illustrating an LTE frequency division duplex (FDD) frame consistent with embodiments disclosed herein.

Figure 8B is a diagram illustrating an LTE time division duplex (TDD) frame consistent with embodiments disclosed herein.

Figure 9 is a diagram of an LTE subframe with muting gaps consistent with embodiments disclosed herein.

Figure 10 is a graph illustrating alignment of a wireless local area network (WLAN) beacon with an LTE subframe muting gap consistent with embodiments disclosed herein.

Figure 11 is a flow chart illustrating a method for creating a muting gap in an LTE protocol consistent with embodiments disclosed herein.

Figure 12 is a flow chart illustrating a method for notifying devices of a muting gap in an LTE protocol consistent with embodiments disclosed herein.

Figure 13 is a flow chart illustrating a method for enabling a muting gap in an LTE protocol consistent with embodiments disclosed herein.

Figure 14 is a schematic diagram of computing system consistent with embodiments disclosed herein.

Detailed Description of Preferred Embodiments

A detailed description of systems and methods consistent with embodiments of the present disclosure is provided below. While several embodiments are described, it should be understood that the disclosure is not limited to any one embodiment, but instead encompasses numerous alternatives, modifications, and equivalents. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

Techniques, apparatus and methods are disclosed that enable co-existence muting gaps to be included in an LTE protocol over unlicensed spectrum to enable a more efficient sharing with other wireless technologies, including wireless local area networks (WLANs) and WLAN protocols (e.g., IEEE 802.11 protocols, Wi-Fi™ by the Wi-Fi Alliance, etc.). For example, an LTE protocol can be altered to include muting gaps that align with a WLAN beacon. In another example, a WLAN access point (AP) can create an information element (IE) that describes muting gaps available to WLAN stations (STAs) such that STAs can remain in a low power state until a muting gap is available. In yet another example, a cell tower and WLAN can be configured such that WLAN beacons occur when the cell tower is not transmitting during selected portions of LTE frames.

Unlicensed spectrum can be configured to be used with long term evolution advanced (LTE-A) by the third generation partnership project (3GPP). Use of the LTE protocol in unlicensed spectrum can be called LTE in Unlicensed (LTE-U). LTE-U can extend the LTE platform into unlicensed deployments, enabling operators and vendors to leverage existing or planned investments in long term evolution/evolved packet core (LTE/EPC) hardware in the radio and core network, especially if LTE-U is used as a supplemental downlink or a component carrier (CC) in an LTE Carrier Aggregation (CA) configuration. Use of LTE in unlicensed band can include consideration of co-existence of LTE with other incumbent technologies. Due to multiple LTE operators using the same unlicensed spectrum, self-coexistence among different LTE operators in the same band can also be a consideration.

It should be recognized that LTE in an unlicensed band (LTE-U) is also referred to as Licensed Assisted Access (LAA) using LTE herein. Where LTE-U is mentioned, LAA can also be considered.

The design of LTE-U can be dependent on the spectrum under consideration. The channel characteristics, such as path loss, frequency selectivity etc., can be dependent on the carrier frequency. In addition, the incumbent technologies in the considered spectrum can affect the interference profile of the LTE-U network deployed in the unlicensed band and an interference profile of the incumbent network. One potential unlicensed spectrum that can be considered for LTE-U is the 5 GHz spectrum (e.g., 5725 - 5850 MHz band currently used by IEEE 802.11a, n and ac wireless local area networks (WLANs)).

Efficient co-existence among LTE-U and WLAN can be obtained in several different ways, including: (1) modifying the existing LTE-A specifications, and by keeping the WLAN specifications unchanged; (2) modifying the existing WLAN specifications, and by keeping the LTE-A standard unchanged; (3) modifying both LTE-A and/or WLAN specifications (i.e., a combination of (1) and (2)); and (4) without any modifications in both LTE-A and WLAN specifications, but instead changing operating parameters, network configurations/reconfigurations and scheduling.

(1) Modification of existing LTE-A specifications

LTE-U can be deployed in a frequency spectrum which has not been used previously for LTE deployment. In some embodiments, existing LTE receivers may not work in the new spectrum (i.e., the medium). LTE-U may not be backward compatible with the existing LTE-A standard.

In some embodiments, co-existence between LTE-U and WLAN can be achieved using a time division duplex mechanism. In the LTE protocol, a tower and UE refrain from transmission on certain time durations. This time duration where LTE refrains from transmission is known as a co-existence muting gap or muting gap. Many WLAN infrastructures access the medium using carrier sense multiple access with collision avoidance (CSMA/CA)-based approach that performs medium sensing. WLAN devices can detect the idle medium during these co-existence muting gaps and then use it for transmission.

In an embodiment, a UE can use a muting gap to achieve additional power savings. During a muting gap, a UE does not receive or send LTE-U transmissions during the duration of the muting gap. The UE can safely turn off its transmitter and/or receiver to achieve additional power savings.

In another embodiment, eNB and UE behavior can be modified during time outside of muting gaps available for LTE-U transmissions (i.e., unmuted time). For example, an eNB and UEs can use listen before talk mechanisms during the unmuted time. In the unmuted time, if no eNB or UE transmission is active, then unused time can also be used by WLAN STAs to transmit. Both eNB and UE can have active receivers during the unmuted time. In other embodiments, an eNB and UEs do not use listen before talk mechanisms during the unmuted time.

In some embodiments, co-existence between LTE-U and WLAN can take advantage of a beacon interval. For example, an AP (access point) or a STA (station) may perform Clear Channel Assessment (CCA) for transmission onto the wireless medium during the LTE transmission duration. In an infrastructure network, generally, APs are connected to a power source, and therefore, performing the additional CCA probably does not cause any complications. However, for mobile STAs, coming out of a power-save mode to perform additional CCA may more quickly drain the battery life of the devices.

In an existing 802.11 power saving mode, a STA can alternate between awake state and doze state. A STA in doze state turns off the radio components and, therefore, refrains from CCA. The AP is always on and can buffer any incoming traffic intended for the STA in doze state. In some embodiments, the AP periodically transmits a beacon signal containing traffic indication map (TIM) information element (IE). Each bit in the partial virtual bitmap in TIM IE represents the association ID (AID) of a STA. The AP sets the corresponding bit for a STA in TIM IE, if it has buffered traffic for the STA. A STA is aware of the beacon interval (also known as target beacon transmit time (TBTT)) and periodically wakes up from doze state to receive the beacon signal. If the STA identifies the existence of buffered packets, it sends a Power Saving (PS)-poll frame to AP to request the delivery of the buffered packets. After finishing the reception of the buffered packet, the STA can go back to doze state.

Co-existence with the LTE-U and battery life of the STAs can be improved by aligning the beacon interval (TBTT) of the AP with the co-existence muting gap of an implementation of LTE-U. A STA operating in power save mode can be in doze state during LTE transmission; however, it can wake up at the start of the co-existence muting gap of LTE-U to receive the beacon signal. If the STA has any buffered packet, it can stay awake to receive the packet. Otherwise the STA can go back to doze state.

In some embodiments, a deployment scenario for LTE-U is as a secondary carrier, where a user equipment (UE) is connected to a primary carrier on licensed band. CRS, PBCH, SIB-1 transmission, etc. are not required for LTE-U carrier. However, PSS/SSS or other similar discovery signal can be required. If such overhead free carrier is used for LTE-U, then alignment of WLAN beacon with LTE is easier. Any subframe in a frame can be used as a co-existence muting gap subframe (or co-existence muting subframes) to accommodate WLAN communication. In addition, co-existence muting can be performed at different granularity levels (e.g., Frame level muting, Subframe level muting, Slot level muting, Symbol level muting or any of the above combination).

(2) Modification of existing WLAN specifications

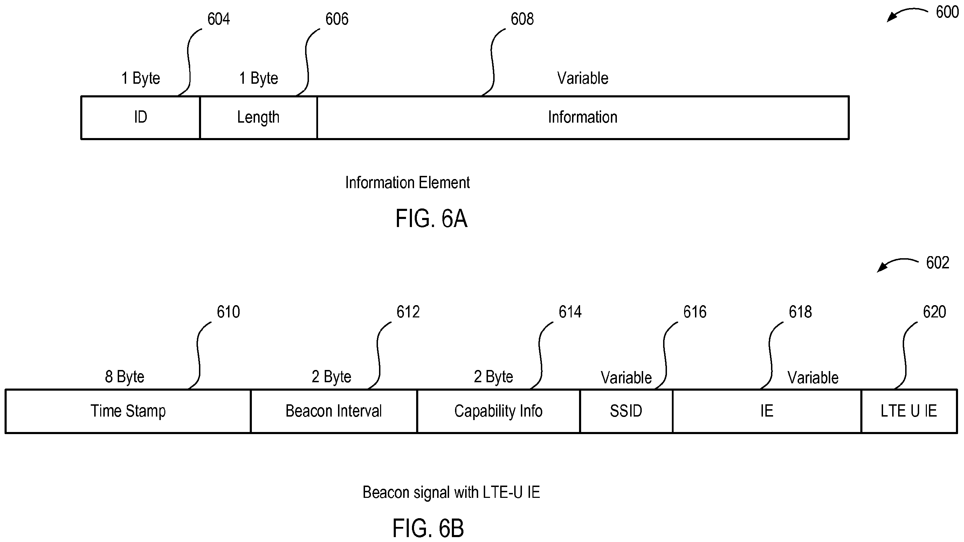

WLAN specifications can be modified to include an additional information element (IE) to indicate the timing of an LTE-U transmission. The IE can be added in the WLAN beacon signals as shown in Figures 6(a) and 6(b). When a STA receives the beacon, it receives information about the existence of the LTE-U network and can refrain from transmission, and/or refrain from sensing the medium during scheduled LTE-U transmission time. A STA can be in doze mode during the LTE-U transmission and thereby save battery life.

(3) Modifying both LTE-A and/or WLAN specifications

A combination of modifying LTE-A specifications and WLAN specifications can be adopted for further system optimization. For example, an LTE-U deployment co-existence muting gap can be introduced as mentioned previously in (1). At the same time, a different energy detection (ED) threshold value can be employed in WLAN deployment for better detection and interference management with LTE-U transmission.

(4) Changing network configuration parameters and scheduling

Distributed coordination function (DCF) operations can be altered to reduce a wake time of STAs. A co-existence muting gap behavior can be introduced into selected LTE-A subframe(s) by proper network configuration and scheduling. By aligning a TBTT interval of a WLAN AP with a co-existence muting gap, more DCF operations can be achieved than without the behavior. In some embodiments, the evolved node Bs (eNBs or eNodeBs) can possess WLAN listening capability. This listening allows the eNB to determine the TBTT interval and make a scheduling decision. This alignment can be transparent to using the LTE-A standard with LTE-U.

The above described attributes can be used in the following examples as illustrated in the figures. It should be noted that attributes described above and below can be selectively used, combined or discarded, depending on the embodiment and needs of a system, a designer, an architect and/or an administrator.

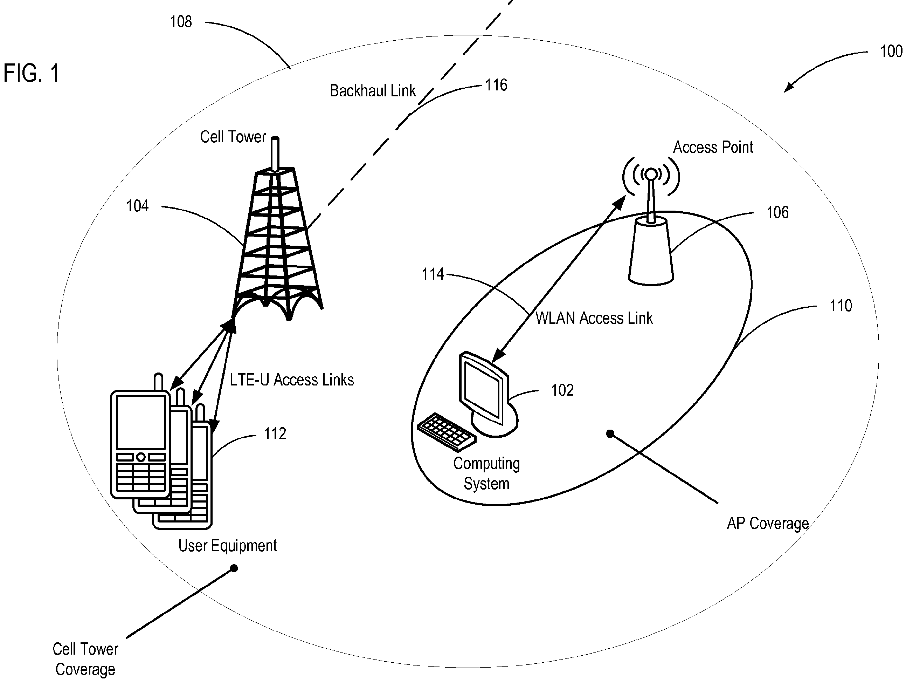

Figure 1 is a schematic diagram illustrating a wireless system 100 consistent with embodiments disclosed herein. Cell tower 104 can communicate with UEs 112 over LTE-U access links. Cell tower 104 can include backhaul link 116 to an EPC, providing UEs 112 with network connectivity. Cell tower 104 can include cell tower coverage 108 that overlaps with AP coverage 110 of access point 106. Access point 106 can provide network connectivity to computing system 102 over WLAN access link 114. Cell tower 104 and access point 106 can share a same unlicensed frequency, which can result in degraded communications of both LTE-U and WLAN communications if not further managed.

In some embodiments, a muting gap can be used to reduce degraded communications and provide for co-existence between LTE-U and WLAN technologies. A muting gap can be introduced into a first protocol (e.g., LTE-U) to allow incumbent protocol(s) (e.g. WLAN) to transmit information without competition from the first protocol. Muting gaps, can thus, provide time periods when the first protocol is silent and a medium (e.g. frequency spectrum) is available for incumbent protocols or other protocols. In a set of embodiments, the LTE-A protocol is enhanced with co-existence behavior for use in LTE-U. For example, the LTE-A protocol can be enhanced to include a muting gap after a frame, during selected subframes or during selected symbols.

Use of a muting gap can be further enhanced. In some embodiments, a muting gap can be aligned with a WLAN beacon interval. For example, cell tower 104 recognizes a WLAN beacon and times a muting gap to occur during the WLAN beacon timing. Cell tower 104 can also recognize an IE within the WLAN beacon that includes a TIM to a STA to aid in the power saving of the STA. Cell tower 104 can use the TIM to determine an additional muting gap to allow transmission between access point 106 and STA.

In other embodiments, the WLAN protocol is enhanced with co-existence behavior. Access point 106 functionality can be enhanced to recognize LTE-U communications and operate in a co-operative state with LTE-U devices. In one embodiment, access point 106 can create an IE within a WLAN beacon that identifies a muting gap pattern or series of muting gaps. A STA can therefore transition into a low power state during LTE-U transmission times and transition to an active power state during muting gap times. In another embodiment, an ED threshold can be modified so that an unrecognized LTE-U signal can be treated at a same ED threshold as a recognized WLAN signal. This change in thresholding can prevent a WLAN STA from transmitting during an LTE-U signal and corrupting the signal, as WLAN and LTE-U signals can receive a same ED threshold.

In yet other embodiments, both the LTE-U protocol and the WLAN protocol can be enhanced with co-existence behavior. For example, cell tower 104 can determine a WLAN beacon interval of access point 106. Cell tower 104 can then adjust LTE-U communications to include a muting gap during the WLAN beacon periods. WLAN access point 106 can include an IE identifying a pattern or series of muting gaps by cell tower 104, allowing STAs to stay in a low power state until a muting gap is available.

In some embodiments, LTE-U and WLAN configurations can be altered to enable better co-existence behavior without adding additional functionality. For example, cell tower 104 can be configured to provide subframe or symbol level muting gaps. Cell tower 104 and/or access point 106 can be adjusted so that the muting gaps coincide with WLAN beacon transmissions by access point 106.

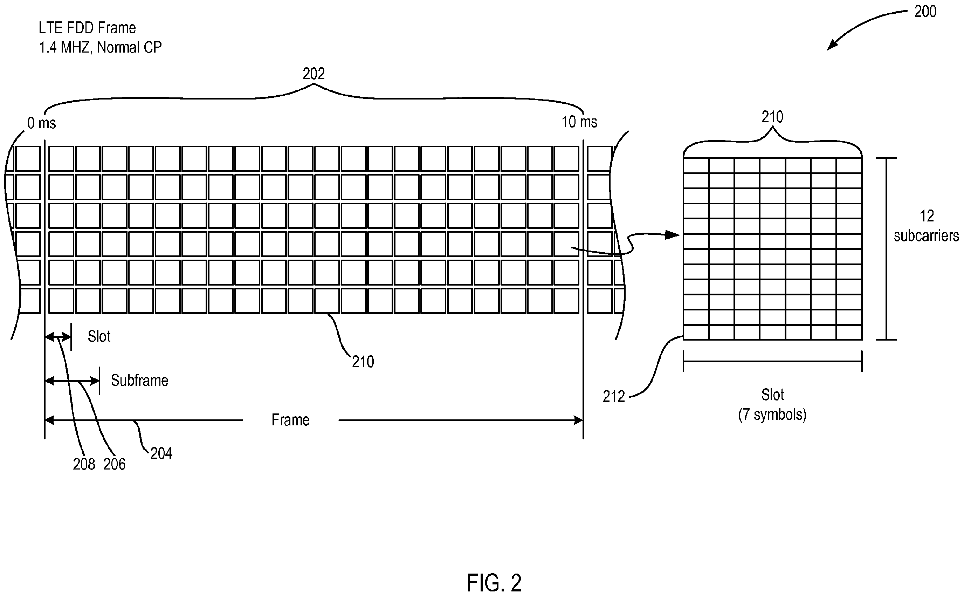

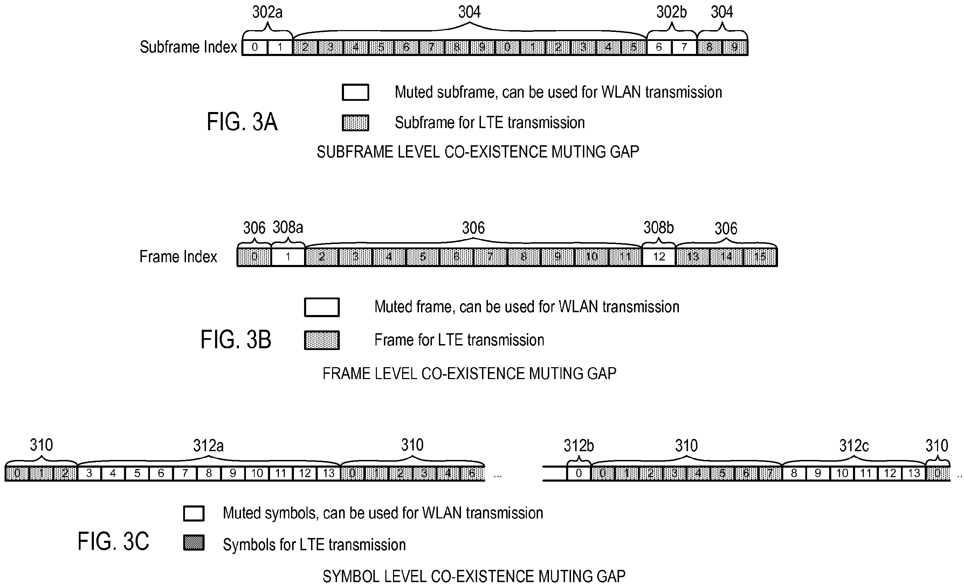

The LTE specification can be enhanced to provide muting gaps for WLAN transmissions. Figure 2 describes an LTE frame and its subparts. Figures 3A to 5 describe ways in which a muting gap can be used in an enhanced LTE protocol.

Figure 2 is a schematic diagram 200 illustrating long term evolution (LTE) communication frame 204 of 10 ms duration 202. In one embodiment, each frequency allocation (carrier) can be in 108 kHz increments. In the diagram shown, a minimum of six carriers are shown. This allows for a bandwidth of 1.08 MHz (six carriers times 180 kHz = 1.08 MHz bandwidth). In some embodiments, the carriers can be expanded to 110 blocks (110 carriers times 180 kHz = 19.8 MHz). Frame 204 can be 10 ms with each slot 208 being 0.5 ms (and each subframe 206 being 1 ms).

Slot 208 at a carrier is resource block 210, which includes seven symbols at 12 orthogonal frequency-division multiplexing (OFDM) subcarriers. Resource element 212 is one OFDM subcarrier for the duration of one OFDM symbol. Resource block 210 can include 84 resource elements 212 when using a normal cyclic prefix (CP). OFDM spacing between individual subcarriers in LTE can be 15 kHz. A guard period of a CP can be used in the time domain to help prevent multipath inter-symbol interference (ISI) between subcarriers. The CP can be a guard period before each OFDM symbol in each subcarrier to prevent ISI (such as due to multipath).

The LTE protocol described above can be enhanced to provide muting gaps as shown in Figures 3A to 3B. It should be recognized that patterns shown in Figures 3A to 3B are examples and other patterns can be used.

For example, Figure 3A shows a diagram of a subframe muting gap. In the figure subframes 0 and 1 (302a), 6 and 7 (302b) are muted to allow for WLAN transmissions. Subframes 304 can be used for LTE transmissions. In each frame, these subframes 302a and 302b can be reserved by the LTE protocol such that WLAN transmissions can occur. These subframes 302a and 302b can be reserved by carrier, across multiple carriers or across all carriers. In some embodiments, an eNB can detect which WLAN channels are in use and insert muting gaps only in the carriers covered by the WLAN channels. In muted subframes 302a and 302b, eNB and UEs refrain from transmission allowing other radio access technologies (RATs) to perform one or more operations. In some embodiments, muting gaps can provide additional power savings over transmissions without muting gaps. As a UE does not need to scan the medium during muting gaps, UE can transition to a lower power state by powering down medium transmitters and/or receivers during muting gaps.

Subframes selected for muting can be statically selected or dynamically selected. In one embodiment, a number and/or location of subframes can be indicated by higher layer signaling. For example, subframe muting can be 1 muted subframe for every 10 subframes or even 1 muted subframe for every 100 subframes. Other lesser, greater or in between combinations are also possible.

During frames outside of muted subframes (also known as unmuted subframes), eNB and/or UEs can transmit signals. However, this does not necessarily indicate that LTE will not use any listen-before-talk (LBT) mechanisms in this regions. For example, two embodiments can include: (1) LTE will not use LBT mechanisms and will transmit whether or not transmission of other RATs are in process; or (2) LTE uses a LBT mechanism before transmitting. With regard to embodiment (1), and in some embodiments, an eNB uses a higher transmission power which can be detected over smaller WLAN transmissions.

For example with regard to embodiment (2), during muting gaps LTE-U devices (e.g., eNB, UE) do not transmit and do not expect to receive any transmission. An LTE system can gain additional benefits of power saving by shutting down transmitters and/or receivers during muting gaps. During the unmuted times, an eNB performs LBT and/or channel reservation mechanism to reserve the channel. Once the channel is reserved/access, eNB and UE can transmit and receive data using the unlicensed band. A UE scans the channel during the unmuted portion of the frame structure, regardless of whether eNB is transmitting or not.

In another example, Figure 3B shows a diagram of a frame muting gap. In the example shown, frames 1 (308a) and 12 (308b) of a 16-frame pattern are reserved and no LTE transmissions occur. LTE transmissions, instead, occur during frames 306. These reserved frames 308a and 308b can be reserved by carrier, across multiple carriers or across all carriers. In some embodiments, an eNB can detect which WLAN channels are in use and insert muting gaps only in the carriers covered by the WLAN channels. It should be recognized that the above discussion about subframe muting gap configuration including power savings, dynamic and static allocation and LBT mechanisms can be applied to frame level muting.

In yet another example, Figure 3C shows a diagram of a symbol muting gap. In the example shown, a dynamic muting gap is shown at a symbol level in a set of resource blocks. In a first block, symbols 3 to 13 (312a) are provided as a muting gap. In a next block, no symbols are provided as a muting gap. In an Nth block, a muting gap is formed from symbol 0 (312b) and symbols 8 to 13 (312c). Symbols 310 can, instead, be used for LTE transmissions. This dynamic nature can be based on traffic buffered by the eNB for transmission over LTE-U. During high periods of traffic, the eNB can suspend some or all of muting gaps. During low periods of traffic, the eNB can reserve larger numbers of symbols for muting gaps.

It should be recognized that these examples can be modified and/or combined. In some embodiments, the selection of timing for a muting gap can be static or dynamic for muting gap selection (including subframe, frame or symbol level gaps). With a static muting gap, the muting gap pattern can repeat. In a dynamic muting gap, muting gaps can be adjusted (e.g., larger, smaller, more frequent, less frequent, etc.) depending on traffic. The traffic can be measured in terms of LTE-U traffic and/or WLAN traffic.

In one embodiment, a muting gap can be aligned with a beacon period used in WLAN protocols. In one example, when WLAN AP uses a beacon period of 102.4 ms, LTE-U can choose to use n (an integer) consecutive subframes on frame # 0, 10, 20, 30 starting at subframe # 1, 3, 5, 8, etc. as co-existence muting gap subframes 402. In this example, n is an integer whose value can depend on the traffic load of the WLAN and LTE network. In another example, the muting can start from a second slot in a subframe or from an *l-th* symbol position in a subframe to have better alignment with the beacons. In Figures 3A, 3B and 3C, examples of subframe level, frame level and symbol level co-existence muting gap are shown.

For the examples of subframe level muting, an example of a design can include a small cell on/off mechanism. The design can support fast on/off switching for certain target subframes in order to achieve better performance by reducing the interference (e.g., between LTE/WLAN or LTE/LTE).

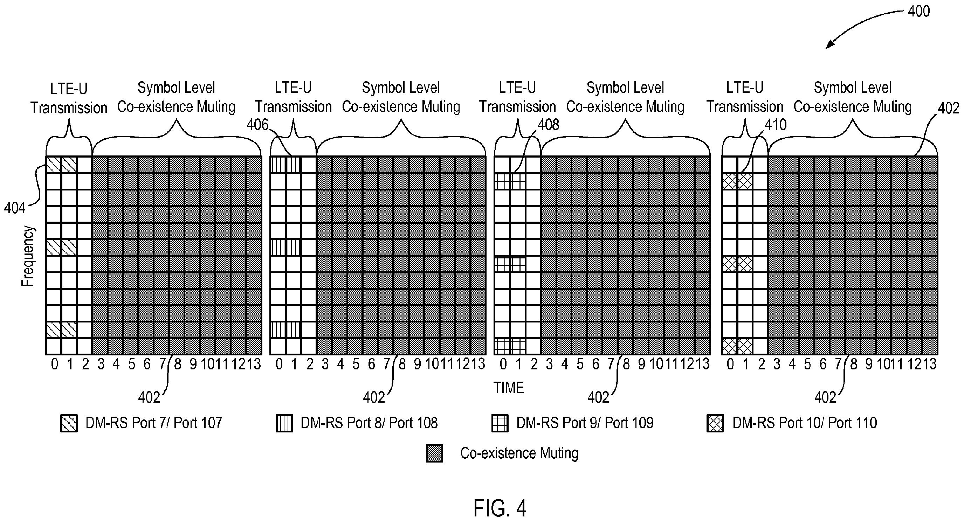

Figure 4 is map 400 of symbol muting gaps with user equipment (UE) demodulation reference signals (DM-RS) 404, 406, 408 and 410. In some embodiments a DM-RS design can be constructed as shown in Figure 4. In some examples of symbol level/slot level co-existence muting gap, only part of an LTE-U subframe is used for LTE transmission, as shown in Figure 3C. Therefore, new design may be required to use the partial subframe for LTE transmission. A new design may include the design of reference signals (e.g., DM-RS, channel state information reference signal (CSI-RS)) or determination of transport block size (TBS) for partial subframe(s).

In one embodiment the new design in case of symbol level muting may include re-use of existing TDD special subframes, whereas the UpPTS and GP portion of the special subframe can be regarded as muting gaps and DwPTS portion of the special subframe can be used for LTE transmission.

Additional design mechanisms can include DM-RS, CSI-RS, and TBS size determination of a special subframe. For example, if a symbol level co-existence muting gap with 11 or 12 muting symbols are used, the DM-RS pattern shown in Figure 4 can be adopted. For other muting symbols, the existing DM-RS design used in the DwPTS region of special subframe in TDD can be reused, by adopting the following changes in LTE specifications 36.211 in Section 6.10.3A.2.

For example, for antenna ports $p=7$, $p=8$ or $p=7, 8, K, v+6$, in a physical resource block with frequency-domain index $n_{\text{PRB}}$ assigned for the corresponding physical downlink shared channel (PDSCH) transmission, a part of the reference signal sequence $r(m)$ shall be mapped to complex-valued modulation symbols $a_{k,l}^{(p)}$ in a subframe according to normal cyclic prefix:

$$a_{k,l}^{(p)} = w_p(l') \cdot r(3 \cdot l' \cdot N_{\text{RB}}^{\max,\text{DL}} + 3 \cdot n_{\text{PRB}} + m')$$

Where:

$$w_p(i) = \begin{cases} \overline{w}_p(i) & (m'+n_{\text{PRB}}) \bmod 2 = 0 \\ \overline{w}_p(3-i) & (m'+n_{\text{PRB}}) \bmod 2 = 1 \end{cases}$$

$$k = 5m' + N_{\text{sc}}^{\text{RB}} n_{\text{PRB}} + k'$$

$$k' = \begin{cases} 1 & p \in \{7,8,11,13\} \\ 0 & p \in \{9,10,12,14\} \end{cases}$$

$$l = \begin{cases} l' \bmod 2 & \text{if symbol level co-existing muting gap with 11 or 12 muting symbols} \\ l' \bmod 2 + 2 & \text{if symbol level co-existing muting gap with 1, 2, 3, 8, 9 or 10 muting symbols} \\ l' \bmod 2 + 2 + 3\lfloor l'/2 \rfloor & \text{if symbol level co-existing muting gap with 4, 5, 6 or 7 muting symbols} \end{cases}$$

$$l' = \begin{cases} 0,1 & \text{if } n_s \bmod 2 = 0 \text{ and if symbol level co-existing muting gap with 11 or 12 muting symbols} \\ 0,1,2,3 & \text{if } n_s \bmod 2 = 0 \text{ and if symbol level co-existing muting gap with 4, 5, 6 or 7 muting symbols} \\ 0,1 & \text{if } n_s \bmod 2 = 0 \text{ and if symbol level co-existing muting gap with 1, 2, 3, 8, 9 or 10 muting symbols} \\ 2,3 & \text{if } n_s \bmod 2 = 1 \text{ and if symbol level co-existing muting gap with 1, 2, 3 muting symbols} \end{cases}$$

$$m' = 0,1,2$$

In the example, the sequence is given by Table 1.

**Table 1** - The sequence $\overline{w}_p(i)$ for normal cyclic prefix

| Antenna port $p$ | $[\overline{w}_p(0)\ \overline{w}_p(1)\ \overline{w}_p(2)\ \overline{w}_p(3)]$ |
|---|---|
| 7 | [+1 +1 +1 +1] |
| 8 | [+1 -1 +1 -1] |
| 9 | [+1 +1 +1 +1] |
| 10 | [+1 -1 +1 -1] |
| 11 | [+1 +1 -1 -1] |
| 12 | [-1 -1 +1 +1] |
| 13 | [+1 -1 -1 +1] |
| 14 | [-1 +1 +1 -1] |

Replacing antenna port numbers 7 - 10 by 107 - 110 in the above equations and tables provides an illustration of the resource elements used for demodulation reference signals associated with enhanced physical downlink control channel (EPDCCH) for a normal cyclic prefix.

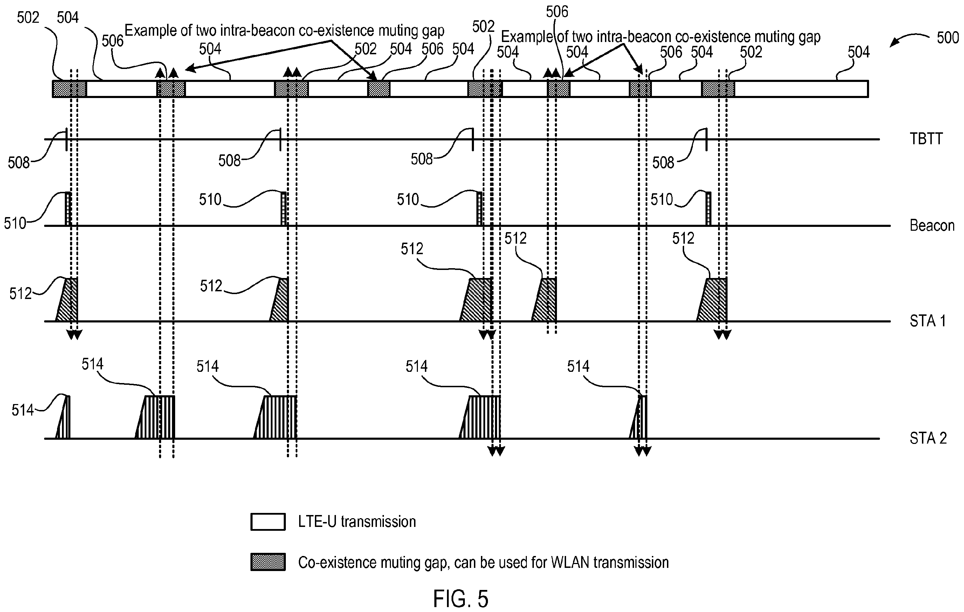

Figure 5 is graph 500 of intra-beacon muting gaps 506 consistent with embodiments disclosed herein. In one embodiment, by aligning TBTT interval 508 with a start of co-existence muting gap 502, STA power savings can be achieved. However, an additional mechanism can improve channel-sensing attempts by STA in case of STA to AP transmission 512 and 514. For example, a mechanism to improve successful CCA in uplink transmission can be achieved by proper placement of a co-existence muting gap in LTE-U deployment. In an LTE-U deployment, in addition to co-existence muting gap 502 aligned with TBTT interval 508, one or more additional co-existence muting gaps 502 can be placed in between TBTT interval 508. Additional optimization in the placement of these intra-beacon 510 co-existence muting gaps 502 is also possible. For example, instead of having one intra-beacon muting gap between two co-existence muting gaps 502 for a beacon, multiple intra-beacon muting gaps 506 with equal placement can be deployed. This can further increase the chance of successful CCA by STAs. In Figure 5, an example of such intra-beacon muting gaps 506 is shown. LTE-U transmissions can occur during non-reserved times 504.

In one embodiment, the WLAN carrier sense mechanism can be a component of the 802.11 CSMA/CA protocol and is composed of two different functions, Clear Channel Assessment (CCA) and the Network Allocation Vector (NAV). CCA is a physical carrier sense mechanism which listens to the received energy on the radio interface, while NAV is a virtual carrier sense mechanism used by WLAN stations to reserve the medium for mandatory frames which follow the current frame. CCA can be composed of two related functions, carrier sense (CS) and energy detection (ED). CS refers to an ability of a receiver to detect and decode an incoming WLAN signal preamble. CCA is reported as busy when another WLAN signal preamble is detected, and is held as busy for the length of the received frame as indicated in the frame physical layer convergence protocol (PLCP) length field. Typically, any incoming WLAN frame, whose PLCP header can be decoded, can cause CCA to report the medium as busy for the time noted from the header for the frame transmission to complete. ED refers to an ability of the receiver to detect non-WLAN energy present on the current channel based on a noise floor, ambient energy, interference sources, and unidentifiable WLAN transmissions that can no longer be decoded (e.g., have been corrupted). Unlike CS, which can determine the length of time the medium will be busy with the current frame, an ED process may sample the medium every slot time to determine if the WLAN energy still exists. In addition, ED uses a predefined threshold which determines if the reported energy level is adequate to report the medium as busy or idle. This is typically referred to as the ED threshold level or CCA sensitivity level. For 802.11 a/g/n, a typical value of ED threshold can be -82 dBm for 20 MHz channel spacing if the start of a valid WLAN preamble is detected. However, if the preamble is missed or is not present (e.g., transmission from other RATs, LTE-U transmission etc.) the ED threshold can be -62 dBm for 20 MHz channel spacing. Therefore, for non-WLAN signals, ED threshold is 20 dB higher than the corresponding WLAN signal ED threshold. This can cause asymmetry in collision detection of WLAN-to-WLAN signal vs. WLAN-to-LTE signal. Several options can be considered to address this issue.

In the case of LTE-U and WLAN co-existence, the ED threshold value for non-WLAN signal can be set to a different (lower) value, than the existing settings. With a lower threshold value, the WLAN devices will be able to detect more LTE-U transmissions. The improvement in detection of LTE-U transmission by the WLAN devices, will lead to less packet collusion between LTE-U and WLAN transmissions, thereby improving co-existence.

In another embodiment, WLAN devices may use a LTE specific ED threshold values to detect LTE-U transmission. LTE-U transmission may include control signaling transmission (when a backward compatible LTE carrier is used) even in the absence of LTE-U data transmission. The periodic transmission of LTE-U control signaling in the first 1 or 2 symbols of an LTE subframe in the absence of LTE-U data transmission is different from the interference generated by other transmissions co-existing with WLAN systems. This interference can be handled differently with respect to the WLAN system sensitivity based on an ED threshold. In addition to typical, infrastructure-based communication for both LTE-U and WLAN systems, it is noted that co-existing device-to-device communications such as based on WLAN Direct for WLAN systems and LTE D2D for LTE-U systems may include device-dependent settings of the ED threshold. In this way, a WLAN Access Point can have different ED threshold settings compared to a WLAN client which may operate in the infrastructure mode or the WLAN Direct mode.

In Figures 6A to 7B, modifications to existing WLAN specifications are shown according to some embodiments. An information element is a self-contained bytes of information that may or may not be relevant to the receiving device. As an example, there may be a number of vendor-specific information elements added to the end of a management frame. The fixed field just indicates whether the option is used and an appropriate element is added. Old STAs that do not understand the new elements can simply ignore them.

Figure 6A is a diagram of information element (IE) 600. In one embodiment, an additional IE 600 to indicate a timing of LTE-U transmission can be added in the WLAN beacon signals. When a STA receives the beacon, it can receive information about an existence of an LTE-U network and can refrain from transmitting data, or sensing the medium during the LTE-U transmission time. A STA can be in doze mode during the LTE-U transmission and thereby save battery life.

In the embodiment shown, first byte 604 of the IE identifies the type of element. The element can use one of the reserved IDs from the range 143-173, or 175-220, or 222-255. Second byte 606 indicates the length of information 608 in the bytes that follow. Because the type and length come first, a legacy WLAN receiver can skip over the element if it does not recognize or understand the type number.

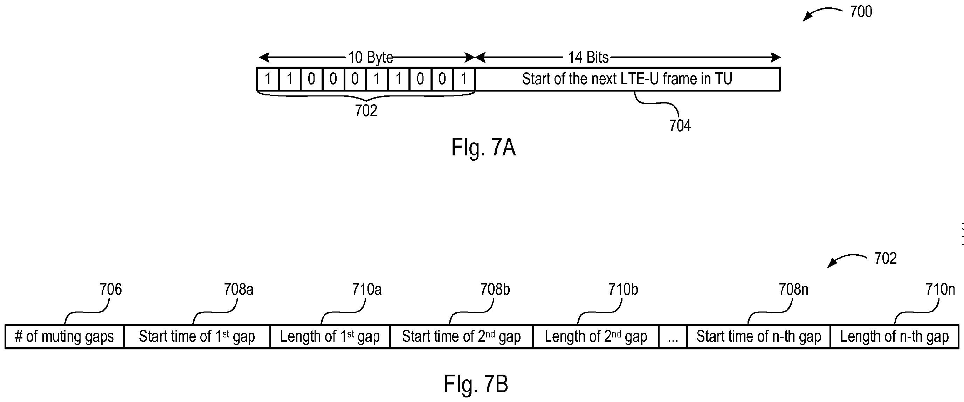

Figure 6B is a diagram of an information element within beacon signal 602. Beacon signal 602 can include time stamp 610, beacon interval 612, capability information 614, service set identification (SSID) 616, IE 618, and LTE-U IE 620. The information contained in LTE-U IE 620 can indicate the LTE muting pattern to the STA. Implementations can be done several different ways, including examples as shown in Figures 7A and 7B.

Figure 7A is a diagram of information element 700 describing a muting gap pattern. Information field 702 can indicate the LTE-U muting subframe/frame/slot/symbol gap within a frame, and boundary 704 to a start of the next frame. In this example, the time duration is given in terms of WLAN time unit (TU) (e.g., 1024 us). Other granularity, such as WLAN slot granularity (9 us), LTE subframe granularity (1 ms) or LTE symbol granularity (66.7 us), or any other suitable granularity can also be used, and also part of this claim. In this example, the value of '0' indicates co-existence muting subframe gap, whereas value of '1' indicates LTE-U transmission on that subframe.

Figure 7B is a diagram of an alternate information element 702 describing a muting gap sequence consistent with embodiments disclosed herein. The information field can indicate a number of upcoming muting gaps 706, start times 708a, 708b up to 708n of the upcoming muting gaps, and gap durations 710a, 710b up to 710n of the upcoming muting gaps when LTE-U transmission can be muted between two beacon signals, as shown in Figure 5.

A concept of non-TIM (traffic indication map) power saving can also be considered for enabling WLAN transmissions (including 802.11 a, g, n, etc.) to align with muting gaps. In such power saving mode, AP and STA negotiate a predefined interval when the STA can wake up. In this way the STA does not have to wake up during beacon interval and can be in sleep mode when not active. The wake time for different STA can be spread out so that channel-access attempt of multiple STAs does not collide. The AP can buffer any downlink traffic for the APs during the sleep mode and deliver during the wake-up time. The STAs are allowed to transmit uplink only during this predefined wake-up time. A target wake time (TWT) IE is exchanged by association request and association response frame that contains the information regarding the wake-up interval. By introducing such non-TIM-based power saving mode in various WLAN standards, efficient co-existence between LTE-U and WLAN can be achieved. The AP can set the TWT of STAs in such a way that aligns with the muting gaps of LTE-U transmission.

As described above, efficient co-existence between LTE-A and WLAN can be achieved by modifying the existing specifications. However, if such modifications are not desirable, then changing the network configuration parameters and utilizing scheduling can aid in more efficient co-existence.

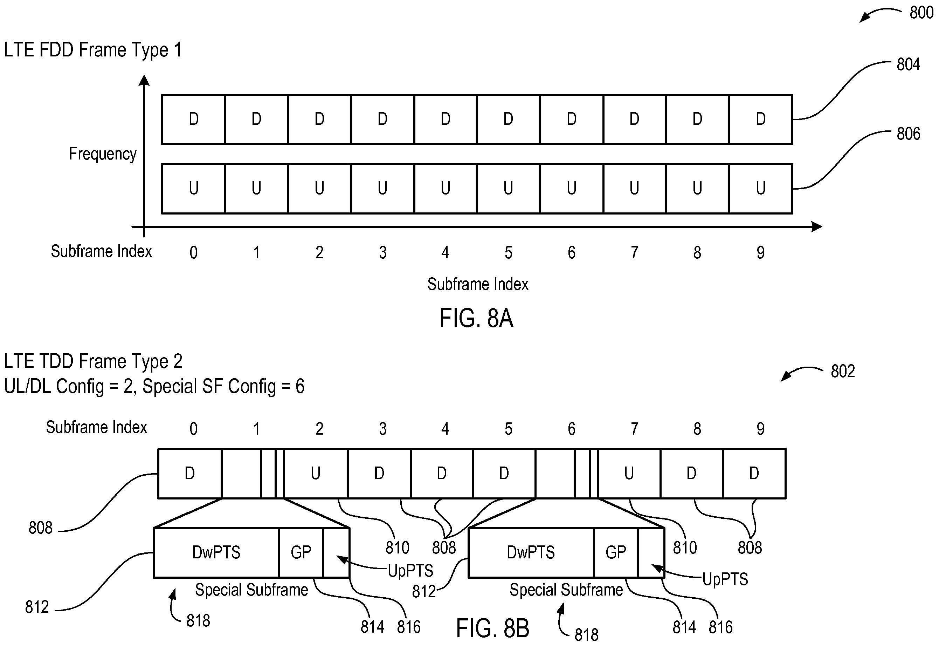

In some embodiments by introducing a co-existence muting gap like behavior to selected LTE-A subframes through proper network configuration and scheduling, LTE-U and WLAN co-existence behavior can be improved In LTE-A not every sub frame in a frame can be used as co-existence muting gaps. Certain signals and information are transmitted on a periodic basis. Figure 8A shows a depiction of an LTE frequency division duplex (FDD) frame. Figure 8B is a diagram illustrating an LTE time division duplex (TDD) frame.

Figure 8A is a diagram illustrating an LTE frequency division duplex (FDD) frame consistent with embodiments disclosed herein. In an FDD frame, upload subframes 806 are on a different carrier (frequency) than download frames 804. In an FDD frame, CRS is transmitted in every subframe, except in the MBSFN region of the MBSFN subframes. PSS and SSS are transmitted in subframes 0 and 5. PBCH is transmitted in subframe 0. SIB-1 is transmitted on subframe 5 on systems frame number (SFN) satisfying the condition where SFN mod 2 = 0 (i.e., every other frame). Paging occurs in subframes 0, 4, 5 and 9 on frames satisfying the equation SFN mod T, where T is the DRX cycle of the UE. In MBSFN subframes, a first one or two symbols are used as non-MBSFN region. CRS is transmitted on the first symbol of non-MBSFN region of an MBSFN subframe.

As a result, subframes 1, 2, 3, 6, 7, and 8 can be configured as MBSFN subframe for FDD. This allows subframes 1, 2, 3, 6, 7 and 8 with MBSFN configurations to be used as co-existence muting gap subframes for FDD, as long as LTE refrains from transmission in these subframes. This can be achieved by proper scheduling.

Figure 8B is a diagram illustrating an LTE time division duplex (TDD) frame consistent with embodiments disclosed herein. In the example shown in a TDD frame, both upload and download operations share a carrier (frequency). Between a transition from download subframes 808 to upload subframes 810 is special subframe 818. Special subframe 818 includes DwPTS 812, a guard period (GP) 814 and uplink pilot time slot (UpPTS) 816. In a TDD frame, CRS is transmitted in every downlink subframe, except in the MBSFN region of the MBSFN subframes. PSS are transmitted on subframes 0 and 5. SSS are transmitted in subframes 1 and 6. Physical broadcast channel (PBCH) is transmitted in subframe 0. System information block (SIB)-1 is transmitted on subframe 5 on systems frame number (SFN) satisfying the condition, where SFN mod 2 = 0 (i.e., every other frame). Paging in subframes 0, 1, 5 and 6 on frame satisfying the equation SFN mod T, where T is the discontinuous reception (DRX) cycle of the UE. In an MBSFN subframe, a first one or two symbols are used as non-MBSFN regions. CRS is transmitted on the first symbol of non-MBSFN region of an MBSFN subframe. Subframes 3, 7, 8, 9 can be configured as MBSFN subframe for TDD.

As a result, subframes 3, 7, 8, 9 with MBSFN configurations can be used as co-existence muting gap subframes. In addition, for TDD, uplink subframes 2 and GP portion of the special subframes can also be considered for co-existence muting gap subframe.

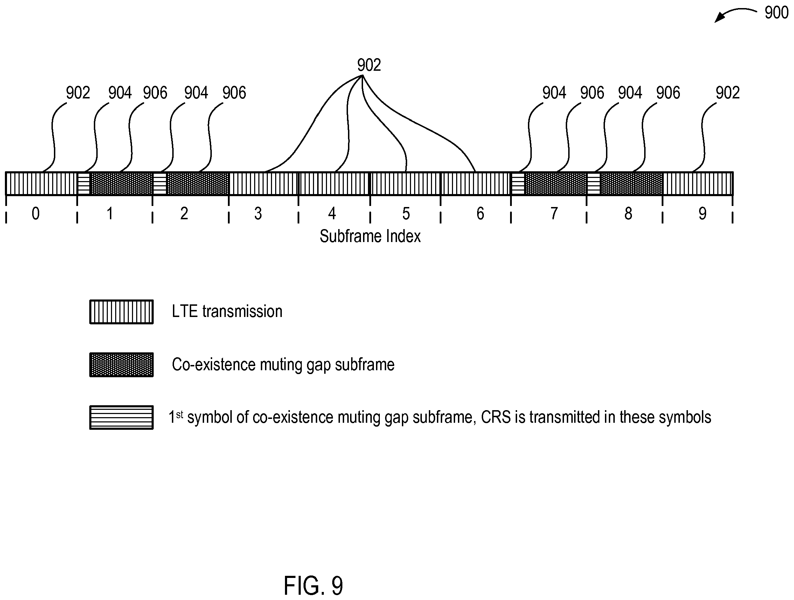

Figure 9 is a diagram of an LTE frame with muting gaps consistent with embodiments disclosed herein. In the example shown, LTE subframes 1, 2, 7 and 8 (906) are configured with MBSFN subframe and left empty (i.e., no LTE transmission is performed in these frames). In a first symbol of the MBSFN subframe, CRS transmission (904) takes place. In some embodiments, from a second symbol onwards, the subframe can be left empty if no LTE transmission is scheduled. From WLAN perspective, when an access point (AP) or station (STA) needs transmission, it can perform CCA. In the above example, the AP or STA can find the medium busy during LTE subframes 0, 3, 4, 5, 6, 9 (902). AP or STA can find the medium empty during LTE subframe 1, 2, 7 or 8 (starting from second symbol) and use DCF (distributed coordination function) protocol to access the medium.

In another embodiment, the co-existence can be further improved by aligning the TBTT interval of the WLAN AP with such co-existence muting gap like behavior as described above. In some embodiments, the eNBs possess WLAN listening capability. The capability can be used for making scheduling decisions, which does not rely on modifications in LTE-A specifications. Such modification can be transparent to the LTE-A standard.

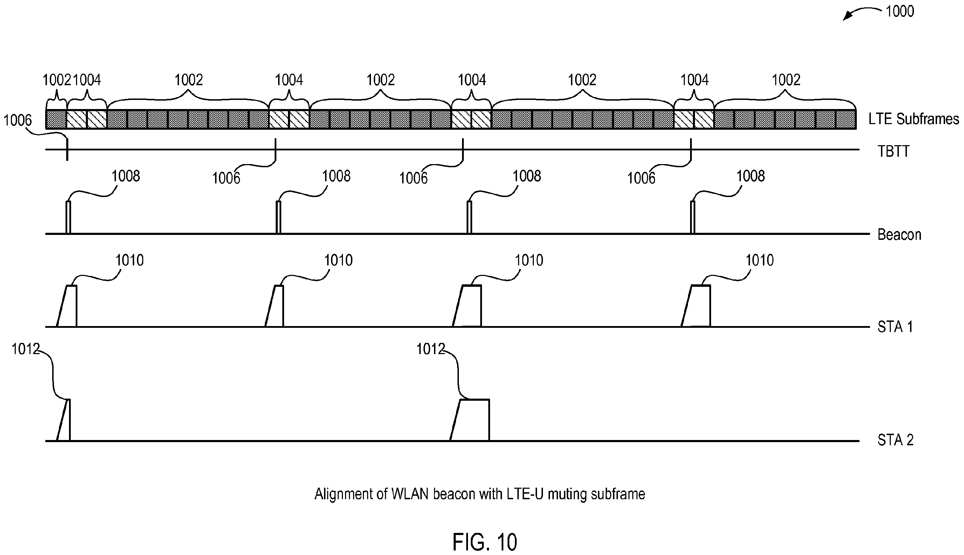

Figure 10 is a graph illustrating alignment of a wireless local area network (WLAN) beacon with an LTE subframe muting gap. To enable more efficient co-existence between the WLAN and LTE-U, beacon interval (TBTT) 1006 of an AP can be aligned with starting of the co-existence muting gap subframe 1004 of the LTE. In this way, a STA operating in power save mode can be in doze state during LTE transmission 1002; however, it can wake up at the start of the muting subframe of LTE to receive beacon signal 1008. If the STA has any buffered packet, it can stay awake to receive the packet. Otherwise the STA can go back to doze state. In some embodiments, additional intra-beacon co-existence muting gaps can also be introduced to facilitate STA to AP communication 1010 and 1012.

A process can be used to align TBTT and co-existence muting gaps. In one embodiment, a WLAN configuration can be modified to change TBTT configuration to align with the periodic co-existence muting gaps of an LTE eNB. In another embodiment, using an LTE configuration can be modified to configure co-existence muting gap periods to align with a TBTT transmission interval 1006.

In some embodiments, a TBTT value is provided using the 16-bit-long beacon interval field in the beacon signal. The beacon interval field represents number of TUs (time units) (1 TU = 1024 us) in TBTT 1006. A typical value of beacon TBTT 1006 is generally set to 102.4 ms.

By selecting a value of TBTT 1006 that closely aligns with the beginning of the muting LTE subframe, power savings for STAs can be achieved. As for an example, a value of beacon interval field is set to 10, which corresponds to a TBTT value of 10.24 ms. In some cases, a granularity of LTE subframe is 1 ms, whereas the granularity of TU in WLAN is 1.024 ms. In these cases, a complete alignment may not be possible. However, as shown in the figure, a TBTT value of 10.24 ms aligns with the LTE muting subframes.

In Figure 10, STA 1 wakes up at a beacon interval, whereas STA 2 wakes up every other beacon interval. When in awake mode, STA 1 and STA 2 analyze the beacon for buffered packet indication. If buffered packet is available for the STA, then the STA can keep awake until it receives the data. Even though the example is shown for a TBTT value of 10.24 ms, other values of TBTT are also possible including the default value of 102.4 ms. In this example, WLAN specification changes are avoided and this method can be transparent to WLAN STAs.

In other embodiments, LTE-U can choose to mute subframes which align with a TBTT interval so that a beacon can be transmitted as closely as possible to TBTT. In Table 2, an example of such muting configuration is shown with a TBTT value of 102.4 ms is used. It is also possible to combine the prior embodiments. In such an embodiment, a more efficient co-existence can be achieved through an optimized TBTT value, which is chosen depending on the network load.

**Table 2** - LTE-U co-existence muting gap subframe configuration for alignment with WLAN beacon

| Muting start time (ms) | WLAN beacon TBTT (ms) | Frame | Subframe |
| --- | --- | --- | --- |
| 1 | 1 | 0 | 1,2 |
| 103 | 103.4 | 10 | 3 |
| 206 | 205.8 | 20 | 6,7 |
| 308 | 308.2 | 30 | 8 |

For example, a MBSFN subframe configuration in LTE is transmitted using MBSFN-SubframeConfig Information Element on SIB-2 message. The SIB-2 message can be transmitted at every 8, 16, 32, 64, ..., 256, 512 frame intervals. Therefore, the MBSFN subframe configuration can be updated in every eight frames. Alternatively, LTE can set the number of MBSFN subframe in a frame fixed to the maximum six subframes and then use eNB scheduling to refrain from transmission on the subframes aligned with the TBTT.

When a co-existence muting gap subframe pattern is applied to an LTE-U operation, in addition to changing the TBTT configuration to align with the periodic co-existence muting gap transmission, a WLAN STA can appropriately adjust its operation to make sure that its transmission(s) is (are) completed within the duration of the co-existence muting gap subframes. This can include adjustments to fragmentation/defragmentation operation (which does not necessarily imply the modification of the fragmentation threshold values but does not exclude it) and/or adjustments to the Block Acknowledgement scheme, and/or adjustments to the Modulation and Coding Scheme (MCS) for transmitting a packet or a fragment of a packet in order to guarantee completion of a transmission within the co-existence muting gap subframes. It is noted that said adjustments do not necessarily imply modification of the corresponding protocol itself.

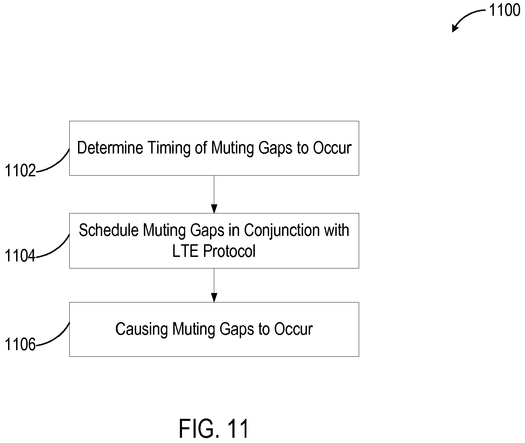

Figure 11 is a flow chart illustrating method 1100 for creating a muting gap in an LTE protocol consistent with embodiments disclosed herein. Method 1100 can be achieved by system 100, such as seen in Figure 1, including UE 112, cell tower 104, computing system 102 and access point 106. In block 1102, a cell tower determines a timing of muting gaps to occur. In block 1104, the cell tower schedules muting gaps in conjunction with LTE transmissions in an LTE protocol. In block 1106, the cell tower causes muting gaps to occur along with LTE transmissions.

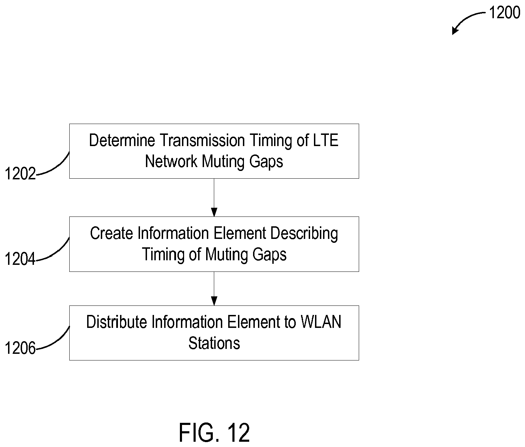

Figure 12 is a flow chart illustrating method 1200 for notifying devices of a muting gap in an LTE protocol consistent with embodiments disclosed herein. Method 1200 can be achieved by system 100, such as seen in Figure 1, including UE 112, cell tower 104, computing system 102 and access point 106. In block 1202, an AP determines a transmission timing of LTE network muting gaps. In block 1204, the AP creates an information element that describes a timing of the muting gaps. In block 1206, the AP distributes the information element to WLAN stations, such as in conjunction with a beacon.

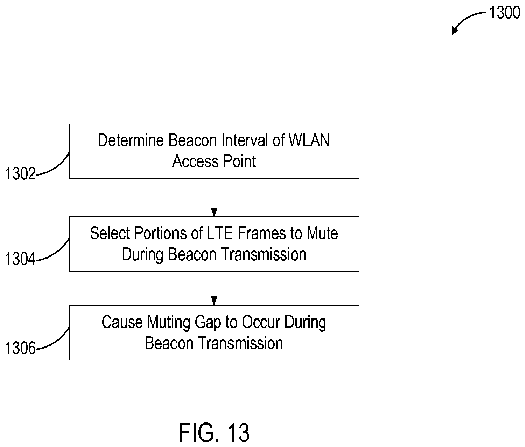

Figure 13 is a flow chart illustrating method 1300 for enabling a muting gap in an LTE protocol consistent with embodiments disclosed herein. Method 1300 can be achieved by system 100, such as seen in Figure 1, including UE 112, cell tower 104, computing system 102 and access point 106. In block 1302, a cell tower determines a beacon interval of a WLAN access point. In block 1304, the cell tower selects portions of LTE frames to mute during beacon transmission of a WLAN AP. In block 1306, the cell tower causes a muting gap to occur during beacon transmission by refraining from transmission during the selected portions of LTE frames (e.g., frames, subframes, slots, symbols, combinations thereof, etc.).

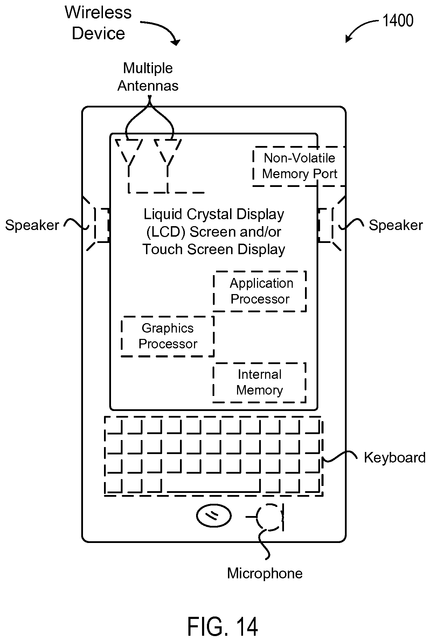

Figure 14 is a schematic diagram of computing system 1400 consistent with embodiments disclosed herein. Computing system 1400 can be viewed as an information passing bus that connects various components. In the embodiment shown, computing system 1400 includes processor 1402 having logic 1402 for processing instructions. Instructions can be stored in and/or retrieved from memory 1406 and storage device 1408 that includes a computer-readable storage medium. Instructions and/or data can arrive from network interface 1410 that can include wired 1414 or wireless 1412 capabilities. Instructions and/or data can also come from I/O interface 1416 that can include such things as expansion cards, secondary buses (e.g., USB, etc.), devices, etc. A user can interact with computing system 1400 though user interface devices 1418 and rendering system 1404 that allows the computer to receive and provide feedback to the user.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell®, Microsoft®, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Examples

The following examples pertain to further embodiments.

Example 1 is a cell tower that includes a configured to transmit information to user equipment (UE) using a long term evolution (LTE) protocol within an unlicensed band of frequencies shared with a wireless local area network (WLAN). The cell tower also includes a scheduler configured to prepare a muting gap that mutes the LTE protocol to allow WLAN systems using the WLAN to transmit during the muting gap. The cell tower further includes a backhaul link configured to provide LTE network connectivity to the UE.

In Example 2, the scheduler in Example 1 can optionally be configured for a static schedule of muting gaps.

In Example 3, the static schedule in Example 2 can optionally be based at least in part on LTE protocol frames.

In Example 4, the static schedule in Example 2 can optionally be based at least in part on target beacon transmission time (TBTT) interval of the WLAN.

In Example 5, the scheduler in Examples 1-4 can optionally be configured for a dynamic scheduling of muting gaps.

In Example 6, the muting gap in Examples 1-5 can optionally include be selected from frame level muting, subframe level muting, slot level muting or symbol level muting.

Example 7 is a wireless access point (AP) for sharing a frequency spectrum with other devices that includes a network controller. The network controller can be configured to determine transmission timing of a third generation partnership project (3GPP) compatible protocol that includes at least one inactive period. The network controller can also be configured to create an information element describing the at least one inactive period. The network controller can be further configured to provide the information element using a non-3GPP compatible protocol to inform non-3GPP compatible devices of the at least one inactive period.

In Example 8, the network controller of Example 7 can optionally be configured to negotiate a target wake time (TWT) with a mobile device from the set of mobile devices that coincides with the at least one inactive period. The network controller can also be configured to, when receiving information for the mobile device, buffer the information until the TWT. The network controller can be further configured to transmit the buffered information for the mobile device after the TWT.

In Example 9, the network controller of Examples 7-8 can optionally include receiving a communication from a 3GPP compatible network that describes the at least one inactive period.

In Example 10, the network controller of Examples 7-9 can optionally be configured to cause a change in an energy detection (ED) threshold of a mobile device from the set of mobile devices during clear channel assessment (CCA) based at least in part on the information element.

In Example 11, the information element of Examples 7-10 is optionally a wireless local area network (WLAN) information element.

In Example 12, the information element of Examples 7-11 optionally describes a repeating pattern of inactive periods available for non-3GPP compatible protocol transmissions.

In Example 13, the information element of Examples 7-12 optionally describes a start time and duration of a set of upcoming inactive periods.

In Example 14, the third generation partnership project (3GPP) compatible protocol of Examples 7-13 can optionally be licensed assisted access using long term evolution (LAA).

Example 15 is a method of protocol co-existence that includes selecting a time duration that is available for muting in a cellular protocol of a first radio access technology (RAT) using a band of frequencies. The method can also include stopping transmission during the muting to make available the band of frequencies for use by a second RAT, which causes a muting gap.

In Example 16, the method of Example 15 can optionally include selecting a set of symbols, slots, subframes or frames for muting.

In Example 17, the method of Examples 15-16 can optionally include a configuration where the muting gap is not aligned with a beacon interval.

In Example 18, the method of Examples 15-16 can optionally include a configuration where the muting gap is aligned with a beacon interval.

In Example 19, the method of Examples 15-18 can optionally include selecting a second time duration that is available for a second muting in the cellular protocol using the band of frequencies. The method can further include stopping transmission during the second muting to make available the band of frequencies for use by the second RAT, which causes a second muting gap. The method can also include at least one of the muting gap and the second muting gap being aligned with a beacon interval.

In Example 20, the method of Examples 15-19 can optionally include configuring a change in an energy detection (ED) threshold of devices using the second RAT during clear channel assessment (CCA).

Example 21 is a method of protocol co-existence that includes determining a beacon interval of a first wireless network using a first protocol using a band of frequencies. The method also includes selecting a set of subframes in a cellular protocol using the band of frequencies that are available for muting during the beacon interval. The method further includes stopping transmission during the cellular protocol to make available the band of frequencies for use with the first protocol, the stopping causing a muting gap.

In Example 22, the method of Example 21 can optionally include configuring one or more subframes as a multicast-broadcast single-frequency network (MBSFN) subframe and refraining from transmission during at least a part of the MBSFN subframe.

In Example 23, the method of Examples 21-22 can optionally include selecting subframe 1, 2, 3, 6, 7, or 8 or a combination thereof for the muting gap in frequency division duplex (FDD) frames.

In Example 24, the method of Examples 21-23 can optionally include selecting subframe 3, 7, 8, or 9 or a combination thereof for the muting gap in time division duplex (TDD) frames.

In Example 25, the method of Examples 21-24 can optionally include selecting a special subframe of a time division duplex (TDD) frame and providing the muting gap during a guard period of the special subframe.

In Example 26, the method of Examples 21-25 can optionally include configuring a change in an energy detection (ED) threshold of devices using the first protocol during clear channel assessment (CCA).

In Example 27, the method of Examples 21-26 can optionally include configuring the beacon interval to match a consistent subframe containing the muting gap within long term evolution (LTE) protocol frames.

In Example 28, the method in Examples 21-27 can optionally include one or more of the following options: configuring one or more subframes as a multicast-broadcast single-frequency network (MBSFN) subframe and refraining from transmission during at least a part of the MBSFN subframe; selecting subframe 1, 2, 3, 6, 7, or 8 or a combination thereof for the muting gap in frequency division duplex (FDD) frames; selecting subframe 3, 7, 8, or 9 or a combination thereof for the muting gap in time division duplex (TDD) frames; or selecting a special subframe of a time division duplex (TDD) frame and providing the muting gap during a guard period of the special subframe.

In Example 29, the method in Examples 21-28 can optionally include one or more of the following options: configuring a change in an energy detection (ED) threshold of devices using the first protocol during clear channel assessment (CCA); or configuring the beacon interval to match a consistent subframe containing the muting gap within long term evolution (LTE) protocol frames.

Example 30 is an apparatus comprising means to perform a method as claimed in any of Examples 21-29.

Example 31 is a machine readable storage including machine-readable instructions that when executed implement a method or realize an apparatus as claimed in any of Examples 21-29.

Example 32 is a method of protocol co-existence including using a listen before transmit mechanism to detect whether a medium is busy. The method also includes determining a portion of a transmission of a 3GPP protocol to use as a muting gap. When the medium is detected as not busy, the method further includes sending the transmission to a set of UEs using the 3GPP protocol and stopping the 3GPP protocol transmission for a time period that coincides with the muting gap.

In Example 33, the method of Examples 32 can optionally include determining a portion of a transmission further comprises selecting a frame, subframe, slot or symbol to use as a muting gap.

In Example 34, the method of Examples 32-33 can optionally include sending muting gap information to at least one of the set of UEs to enable the UE to transition to a lower power state during the muting gap.

In Example 35, the method of Examples 32-34 can optionally include scanning the medium to determine traffic behavior of devices using a second protocol.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel®, AMD®, or other "off-the-shelf" microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc., that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment of the present invention. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the invention is not to be limited to the details given herein, but may be modified within the scope of the appended claims.

Those having skill in the art will appreciate that many changes may be made to the details of the above-described embodiments without departing from the underlying principles of the invention. The scope of the present invention should, therefore, be determined only by the following claims.

**Claims**

1. A cell tower (104) comprising a WLAN listening capability and being configured to listen for WLAN and to determine a target beacon transmission time TBTT interval (508) of the WLAN based on the listening, the cell tower (104) comprising:

   a transmitter configured to transmit information to user equipment UE (112) using a long term evolution LTE protocol (200) within an unlicensed band of frequencies shared with a wireless local area network WLAN;
   a scheduler configured to prepare a muting gap, wherein the muting gap mutes the LTE protocol; and
   a backhaul link configured to provide LTE network connectivity to the UE,
   wherein the scheduler is configured for a static schedule of muting gaps, and
   wherein the static schedule is based at least in part on the TBTT interval (508) of the WLAN, wherein the TBTT interval (508) coincides with a muting gap (502), and
   one or more additional muting gaps (506) are placed in between two TBTT intervals (508).

2. The cell tower of claim 1, wherein multiple intra-beacon muting gaps (506) with equal placement are deployed between two muting gaps (502) for a beacon.

3. The cell tower of claims 1 or 2, wherein the scheduler is additionally configured for a dynamic scheduling of muting gaps.

4. The cell tower of claim 1, wherein the muting gap is selected from frame level muting, subframe level muting, slot level muting or symbol level muting.

5. A method of operating an eNB (104) comprising:

   listening for a WLAN and determining a target beacon transmission time TBTT interval (508) of the WLAN based on the listening;
   transmitting information to user equipment UE (112) using a long term evolution LTE protocol (200) within an unlicensed band of frequencies shared with a wireless local area network WLAN;

preparing a muting gap, wherein the muting gap mutes the LTE protocol; and
configuring a backhaul link to provide LTE network connectivity to the UE, wherein a static schedule of muting gaps is configured, and the static schedule is based at least in part on target beacon transmission time TBTT interval (508) of the WLAN, wherein
the TBTT interval (508) coincides with a muting gap (502), and
one or more additional muting gaps (506) are placed in between two TBTT intervals (508).

6. The method of claim 5, wherein multiple intra-beacon muting gaps (506) with equal placement are deployed between two muting gaps (502) for a beacon.

**Patentansprüche**

1. Ein Zellenturm (104), der eine WLAN-Abhörfunktion umfasst und konfiguriert ist, um ein WLAN abzuhören und ein Ziel-Bake-Übertragungszeit-TBTT-Intervall (508) des WLANs basierend auf dem Abhören zu bestimmen, wobei der Zellenturm (104) umfasst:

einen Sender, der so konfiguriert ist, dass er Informationen an die Benutzervorrichtung UE (112) unter Verwendung eines Long-Term-Evolutions-LTE-Protokolls (200) innerhalb eines unlizenzierten Frequenzbandes, das mit einem drahtlosen lokalen Gebietsnetzwerk WLAN gemeinsam genutzt wird, überträgt;
einen Planer, der so konfiguriert ist, dass er eine Stummschaltungslücke vorbereitet, wobei die Stummschaltungslücke das LTE-Protokoll stummschaltet; und
eine Backhaul-Verbindung, die konfiguriert ist, um eine LTE-Netzwerk-Konnektivität für die UE bereitzustellen, wobei der Planer für einen statischen Plan von Stummschaltungslücken konfiguriert ist, und wobei der statische Plan zumindest teilweise auf dem TBTT-Intervall (508) des WLANs basiert, wobei das TBTT-Intervall (508) mit einer Stummschaltungslücke (502) zusammenfällt, und
eine oder mehrere zusätzliche Stummschaltungslücken (506) zwischen zwei TBTT-Intervallen (508) platziert werden.

2. Zellenturm nach Anspruch 1, wobei mehrere Intra-Bake-Stummschaltungslücken (506) mit gleicher Platzierung zwischen zwei Stummschaltungslücken (502) für ein Bake eingesetzt werden.

3. Zellenturm nach Anspruch 1 oder 2, wobei der Planer zusätzlich für eine dynamische Planung von Stummschaltungslücken konfiguriert ist.

4. Zellenturm nach Anspruch 1, wobei die Stummschaltungslücke aus Rahmenebene-Stummschaltung, Subrahmenebene-Stummschaltung, Schlitzebenen-Stummschaltung oder Symbolebenen-Stummschaltung ausgewählt wird.

5. Ein Verfahren zum Betreiben eines eNB (104), umfassend:

Abhören eines WLANs und Bestimmen einer Ziel-Bake-Übertragungszeit-TBTT-Intervalls (508) des WLANs basierend auf dem Abhören;
Übertragen von Informationen an die Benutzervorrichtung UE (112) unter Verwendung eines Long-Term-Evolution-LTE-Protokolls (200) innerhalb eines unlizenzierten Frequenzbandes, das mit einem drahtlosen lokalen Gebietsnetzwerk WLAN gemeinsam genutzt wird;
Vorbereiten einer Stummschaltungslücke, wobei die Stummschaltungslücke das LTE-Protokoll stummschaltet; und
Konfigurieren einer Backhaul-Verbindung, um eine LTE-Netz-Konnektivität für die UE bereitzustellen, wobei ein statischer Plan von Stummschaltungslücken konfiguriert wird und der statische Plan zumindest teilweise auf dem Ziel-Bake-Übertragungszeit-TBTT-Intervall (508) des WLANs basiert,
wobei das TBTT-Intervall (508) mit einer Stummschaltungslücke (502) zusammenfällt und eine oder mehrere zusätzliche Stummschaltungslücken (506) zwischen zwei TBTT-Intervallen (508) angeordnet sind.

6. Verfahren nach Anspruch 5, wobei mehrere Intra-Bake-Stummschaltungslücken (506) mit gleicher Platzierung zwischen zwei Stummschaltungslücken (502) für eine Bake eingesetzt werden.

**Revendications**

1.  Une tour cellulaire (104) comprenant une capacité d'écoute de WLAN et qui est configurée pour écouter un WLAN et pour déterminer un intervalle de temps de transmission de balise cible, TBTT, (508) du WLAN sur la base de l'écoute, la tour cellulaire (104) comprenant :

    un émetteur configuré pour transmettre une information à un équipement utilisateur UE (112) en utilisant un protocole évolution à long terme, LTE, (200) dans une bande de fréquences sans licence partagée avec un réseau local sans fil WLAN ;
    un planificateur configuré pour préparer un espace silencieux, l'espace silencieux rendant silencieux le protocole LTE ; et
    une liaison backhaul configurée pour fournir une connectivité de réseau LTE à l'UE,
    dans lequel le planificateur est configuré pour une planification statique d'espaces silencieux, et
    dans lequel la planification statique est basée au moins en partie sur l'intervalle TBTT (508) du WLAN, dans lequel l'intervalle TBTT (508) coïncide avec un espace silencieux (502), et
    un ou plusieurs espaces silencieux additionnels (506) sont placés entre deux intervalles TBTT (508).

2.  La tour cellulaire selon la revendication 1, dans laquelle de multiples espaces silencieux intra-balise (506) avec un placement égal sont déployés entre deux espaces silencieux (502) pour une balise.

3.  La tour cellulaire selon les revendications 1 ou 2, dans laquelle le planificateur est configuré de plus pour une planification dynamique d'espaces silencieux.

4.  La tour cellulaire selon la revendication 1, dans laquelle l'espace silencieux est sélectionné parmi un silencieux au niveau trame, un silencieux au niveau sous-trame, un silencieux au niveau slot ou un silencieux au niveau symbole.

5.  Un procédé de mise en œuvre d'un eNB (104) comprenant :

    l'écoute d'un WLAN et la détermination d'un intervalle de temps de transmission de balise cible, TBTT, (508) du WLAN sur la base de l'écoute ;
    la transmission d'une information à un équipement utilisateur UE (112) en utilisant un protocole évolution à long terme, LTE, (200) dans une bande de fréquences sans licence partagée avec un réseau local sans fil WLAN ;
    la préparation d'un espace silencieux, l'espace silencieux rendant silencieux le protocole LTE ; et
    la configuration d'une liaison backhaul pour fournir une connectivité de réseau LTE à l'UE, dans lequel une planification statique d'espaces silencieux est configurée,
    et la planification statique est basée au moins en partie sur l'intervalle de temps de transmission de balise cible TBTT (508) du WLAN, dans lequel
    l'intervalle TBTT (508) coïncide avec un espace silencieux (502), et
    un ou plusieurs espaces silencieux additionnels (506) sont placés entre deux intervalles TBTT (508).

6.  Le procédé selon la revendication 5, dans lequel de multiples espaces silencieux intra-balise (506) avec un placement égal sont déployés entre deux espaces silencieux (502) pour une balise.

FIG. 1

FIG. 2

302a    304    302b    304

Subframe Index [0][1][2][3][4][5][6][7][8][9][10][11][12][13][14][15][6][7][8][9]

☐ Muted subframe, can be used for WLAN transmission

▩ Subframe for LTE transmission

FIG. 3A

SUBFRAME LEVEL CO-EXISTENCE MUTING GAP

306 308a    306    308b    306

Frame Index [0][1][2][3][4][5][6][7][8][9][10][11][12][13][14][15]

☐ Muted frame, can be used for WLAN transmission

▩ Frame for LTE transmission

FIG. 3B

FRAME LEVEL CO-EXISTENCE MUTING GAP

310    312a    310    312b    310    312c    310

[0][1][2][3][4][5][6][7][8][9][10][11][12][13][0][1][2][3][4][5] ... [0][1][2][3][4][5][6][7][8][9][10][11][12][13][0] ...

☐ Muted symbols, can be used for WLAN transmission

▩ Symbols for LTE transmission

FIG. 3C

SYMBOL LEVEL CO-EXISTENCE MUTING GAP

EP 3 092 848 B1

FIG. 4

FIG. 5

EP 3 092 848 B1

604 606 608

| 1 Byte | 1 Byte | Variable |
|--------|--------|-------------|
| ID | Length | Information |

Information Element

FIG. 6A

600

602

610 612 614 616 618 620

| 8 Byte | 2 Byte | 2 Byte | Variable | Variable | |
|--------|--------|--------|----------|----------|--------|
| Time Stamp | Beacon Interval | Capability Info | SSID | IE | LTE U IE |

Beacon signal with LTE-U IE

FIG. 6B

EP 3 092 848 B1

700

| 10 Byte | 14 Bits |
|---|---|
| 1 \| 1 \| 0 \| 0 \| 0 \| 1 \| 1 \| 0 \| 0 \| 1 | Start of the next LTE-U frame in TU |

702

704

Flg. 7A

702

706 708a 710a 708b 710b 708n 710n

| # of muting gaps | Start time of 1st gap | Length of 1st gap | Start time of 2nd gap | Length of 2nd gap | ... | Start time of n-th gap | Length of n-th gap |
|---|---|---|---|---|---|---|---|

Flg. 7B

LTE FDD Frame Type 1

Frequency

Subframe Index  0  1  2  3  4  5  6  7  8  9

Subframe Index

FIG. 8A

LTE TDD Frame Type 2
UL/DL Config = 2, Special SF Config = 6

Subframe Index  0  1  2  3  4  5  6  7  8  9

Special Subframe

FIG. 8B

EP 3 092 848 B1

FIG. 9

Alignment of WLAN beacon with LTE-U muting subframe

FIG. 10

1100

```
┌─────────────────────────────────────────┐
1102 │   Determine Timing of Muting Gaps to Occur │
     └─────────────────────────────────────────┘
                        │
                        ▼
     ┌─────────────────────────────────────────┐
1104 │   Schedule Muting Gaps in Conjunction with │
     │              LTE Protocol                  │
     └─────────────────────────────────────────┘
                        │
                        ▼
     ┌─────────────────────────────────────────┐
1106 │        Causing Muting Gaps to Occur        │
     └─────────────────────────────────────────┘
```

FIG. 11

1200

```
          ┌─────────────────────────────────────┐
          │  Determine Transmission Timing of LTE │
          │       Network Muting Gaps             │
1202      └─────────────────────────────────────┘
                          │
                          ▼
          ┌─────────────────────────────────────┐
          │  Create Information Element Describing│
          │        Timing of Muting Gaps          │
1204      └─────────────────────────────────────┘
                          │
                          ▼
          ┌─────────────────────────────────────┐
          │  Distribute Information Element to WLAN│
          │              Stations                 │
1206      └─────────────────────────────────────┘
```

FIG. 12

1300

Determine Beacon Interval of WLAN
Access Point

1302

Select Portions of LTE Frames to Mute
During Beacon Transmission

1304

Cause Muting Gap to Occur During
Beacon Transmission

1306

FIG. 13

Wireless
Device

1400

Multiple
Antennas

Non-Volatile
Memory Port

Speaker

Liquid Crystal Display
(LCD) Screen and/or
Touch Screen Display

Speaker

Application
Processor

Graphics
Processor

Internal
Memory

Keyboard

Microphone

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIMO NIHTILA et al.** System performance of LTE and IEEE 802.11 coexisting on a shared frequency band. *WCNC,* 01 April 2013

- **MICHAELA BELURI et al.** Mechanisms for LTE coexistence in TV white space. *IEEE Symposium on Dynamic Spectrum Access Networks,* 16 October 2012
- *TDM solutions for In-Device Coexistence*